# EUROPEAN PATENT SPECIFICATION

(11) **EP 2 066 093 B1**
(45) Date of publication and mention of the grant of the patent: **12.01.2011**
(21) Application number: 08170123.7
(22) Date of filing: 27.11.2008
(51) Int. Cl.: H04L 29/06, H04L 12/18

(54) **Mobile communication terminal and signal relay method**
Mobiles Kommunikationsendgerät und Signalrelais-Verfahren
Terminal de communication mobile et procédé de relais de signaux

(30) Priority: 28.11.2007 JP 2007307764
(43) Date of publication of application: 03.06.2009
(73) Proprietor: NTT DOCOMO, INC., Chiyoda-ku Tokyo 100-6150 (JP)
(72) Inventor: Tsutsumi, Noriyuki c/o Intellectual Property Dept., NTT DoCoMo, Inc.,, Chiyoda-ku, Tokyo 100-6150 (JP); Nakajima, Kazuto c/o Intellectual Property Dept., NTT DoCoMo, Inc.,, Chiyoda-ku, Tokyo 100-6150 (JP); Miura, Shunji c/o Intellectual Property Dept., NTT DoCoMo, Inc.,, Chiyoda-ku, Tokyo 100-6150 (JP)
(74) Representative: Viering, Jentschura & Partner

(56) References cited:
- WO-A-02/096097
- US-A1- 2002 196 746
- US-A1- 2007 093 238

## Description

### BACKGROUND OF THE INVENTION

### Field of the Invention

The present invention relates to a mobile communication terminal and signal relay method.

### Related Background Art

In recent years, mobile-phone handsets and other such mobile communication terminals have been being used to carry out video conferencing. As technologies related to such video conference communication systems, a video conference communication system that simultaneously broadcasts audio/video data from a transmission source terminal to a plurality of distribution destination terminals by way of a control apparatus, and a video conference control apparatus that reduces and synthesizes video signals received from respective terminals, and superposes conference information thereon before distributing same together with audio signals and data signals, are known (refer to Japanese Patent Laid-open No. 2000-50225 and Japanese Patent Laid-open No. 7-162823).

Further, there has also been disclosed a video conference communication system that makes it possible to allocate facsimile data and personal computer data transmission bands to video data and voice data transmission bands so as to enable the transmitting and receiving of facsimile data and image data while video conferencing (refer to Japanese Patent Laid-open No. 5-244109).
US 2007/093238A1 discloses a communication system for video conferencing consisting of two mobile devices, two computers and a proxy. The first mobile device is connected to the second mobile device, the two computers are connected to each other, and the proxy is connected to the second mobile device and to the two computers. A first image acquired by the first mobile device is sent to each of the two computers, and images acquired by each of the two computers are transmitted to the proxy, then are combined by the proxy, and transmitted to the first mobile device.

US 2002/196746A1 discloses a method for establishing two-way video communication. Images from several webcams can be displayed at a client in a one-way fashion, and by selection of one of the images from the webcams, a two-way video communication with the respective webcam can be established.

However, in the conventional video conference communication systems described above, since the respective communication terminals are connected to a digital communication network, there is a tendency for wasteful traffic generated on the digital communication network to result in higher communication costs. Further, the video data and audio data of the transmission source communication terminal can conceivably be multiplexed and transmitted to the digital communication network, but even in this case, the amount of data transmitted and received over the digital communication network is huge, and, in addition, functions for extracting the video data and audio data received by the receiving side terminal become necessary.

### SUMMARY OF THE INVENTION

Accordingly, the present invention was made with these problems in view, and an object of the present invention is to provide a mobile communication terminal and a signal relay method that make it possible to lower communication costs using a simple configuration by reducing the traffic on the communication network resulting from data communications for video conference use.

To solve for the above-mentioned problems, a mobile communication terminal of the present invention is for use in signal relay for relaying transmission signals, which are audio signals or video signals created by a plurality of transmission source terminals, to a transmission destination terminal that is connected via a mobile communication network, and comprises inputting means for creating a first transmission signal, which is an audio signal or a video signal, based on audio or video directly input from outside; short-range communication means for receiving second transmission signals, which are audio signals or video signals, from the plurality of transmission source terminals via short-range communications; signal synthesizing means for synthesizing the first transmission signal with the second transmission signals transmitted from the plurality of transmission source terminals, and outputting a synthesized signal; signal selecting means for selecting a signal from among the first transmission signal, second transmission signals, and the synthesized signal; and signal transmitting means for transmitting the signal selected by the signal selecting means to the transmission destination terminal via the mobile communication network; wherein the signal selecting means selects a signal based on a select-signal request transmitted from the transmission source terminal or the transmission destination terminal.

Or, a signal relay method of the present invention for relaying transmission signals, which are audio signals or video signals created by a plurality of transmission source terminals, to a transmission destination terminal connected via the mobile communication network, comprising an input step in which inputting means creates a first transmission signal, which is an audio signal or a video signal, based on audio or video directly input from outside; a short-range communication step in which short-range communication means receives second transmission signals, which are audio signals or video signals, from the plurality of transmission source terminals via short-range communications; a signal synthesizing step in which signal synthesizing means synthesizes the first transmission signal with the second transmission signals transmitted from the plurality of transmission source terminals, and outputs a synthesized signal; a signal selection step in which signal selecting means selects a signal from among the first transmission signal, the second transmission signals, and the synthesized signal; and a signal transmitting step in which signal transmitting means transmits the signal selected by the signal selecting means to the transmission destination terminal via the mobile communication network; wherein the signal selecting means selects a signal based on a select-signal request transmitted from the transmission source terminal or the transmission destination terminal.

According to this mobile communication terminal and signal relay method, one signal is selected from among a first transmission signal, which is based on audio or video that was directly input from outside, second transmission signals, which have been received as audio or video from a plurality of transmission source terminals via short-range communications, and a synthesized signal, which synthesizes the first and second transmission signals, and is transmitted to a transmission destination terminal via a mobile communication network. Consequently, when video or audio from a plurality of mobile communication terminals is selectively transmitted to a transmission destination, since the required signal is selected beforehand and sent to the mobile communication network, wasteful traffic is reduced, making it possible to lower communication costs using a simple configuration.

According to this mobile communication terminal and signal relay method, signal selecting means select a signal based on a signal selection requirement, which is transmitted from either the transmission source terminal or the transmission destination terminal. In this case, since a transmission signal is selected from among the first transmission signal, second transmission signals and synthesized signal based on either a transmission source or transmission destination requirement, the timely provision of either video or audio is realized in the video conference.

Further, it is also preferable that short-range communication means commence receiving the second transmission signals from the pertinent transmission source terminals subsequent to receiving a connection request from the transmission source terminal, and that signal synthesizing means synthesize the first transmission signal and the second transmission signals transmitted from transmission source terminals, which are the connection-requesting transmission source. If this configuration is adopted, the second transmission signals will start being received when the connection request is received from the transmission source terminal, thereby enabling either a video signal or an audio signal to be reliably received from the transmission source terminal, facilitating the transmission source terminal's smooth participation in the video conference.

Furthermore, it is also preferable that short-range communication means commence receiving the second transmission signals from the pertinent transmission source terminals subsequent to a connection request to the transmission source terminal being established, and that signal synthesizing means synthesize the first transmission signal and the second transmission signals sent from the transmission source terminals, which are the connection-requesting transmission source. By so doing, since reception of the second transmission signals starts when a short-range communication session is established with the transmission source terminals, it is possible to reliably receive either video signals or audio signals from the transmission source terminals, thus facilitating the smooth convening of the transmission source terminals into the video conference.

### BRIEF DESCRIPTION OF THE DRAWING

Fig. 1 is a general block diagram of a mobile communication terminal that is the first embodiment of the present invention;
Fig. 2 is a diagram of the hardware configuration of the mobile communication terminal of Fig. 1;
Fig. 3 is a sequence diagram illustrating operations when a video conference communication system comprising the mobile communication terminal of Fig. 1 commences communications;
Fig. 4 is a sequence diagram illustrating operations when a video conference communication system comprising the mobile communication terminal of Fig. 1 commences communications;
Fig. 5 is a sequence diagram illustrating operations when a video conference communication system comprising the mobile communication terminal of Fig. 1 is disconnected;
Fig. 6 is a sequence diagram illustrating operations when a video conference communication system comprising the mobile communication terminal of Fig. 1 is disconnected;
Fig. 7 is a general block diagram of the mobile communication terminal that is the first embodiment of the present invention;
Fig. 8 is a sequence diagram illustrating operations when a video conference communication system comprising the mobile communication terminal of Fig. 7 commences communications;
Fig. 9 is a sequence diagram illustrating operations when a video conference communication system comprising the mobile communication terminal of Fig. 7 is disconnected;
Fig. 10 is a sequence diagram illustrating operations when a video conference communication system comprising the mobile communication terminal of Fig. 7 is disconnected;
Fig. 11 is a sequence diagram illustrating operations when a video conference communication system comprising the mobile communication terminal of Fig. 7 distributes terminal information;
Fig. 12 is a sequence diagram illustrating operations when a video conference communication system comprising the mobile communication terminal of Fig. 7 switches transmission signals; and
Fig. 13 is a sequence diagram illustrating operations when a video conference communication system comprising the mobile communication terminal of Fig. 7 switches transmission signals.

### DESCRIPTION OF THE PREFERRED EMBODIMENTS

The preferred embodiments of a mobile communication terminal according to the present invention will be explained in detail hereinbelow together with the figures. Furthermore, the same reference numerals will be assigned to the same elements in the explanations of the figures, and explanations that duplicate one another will be omitted.

### [First Embodiment]

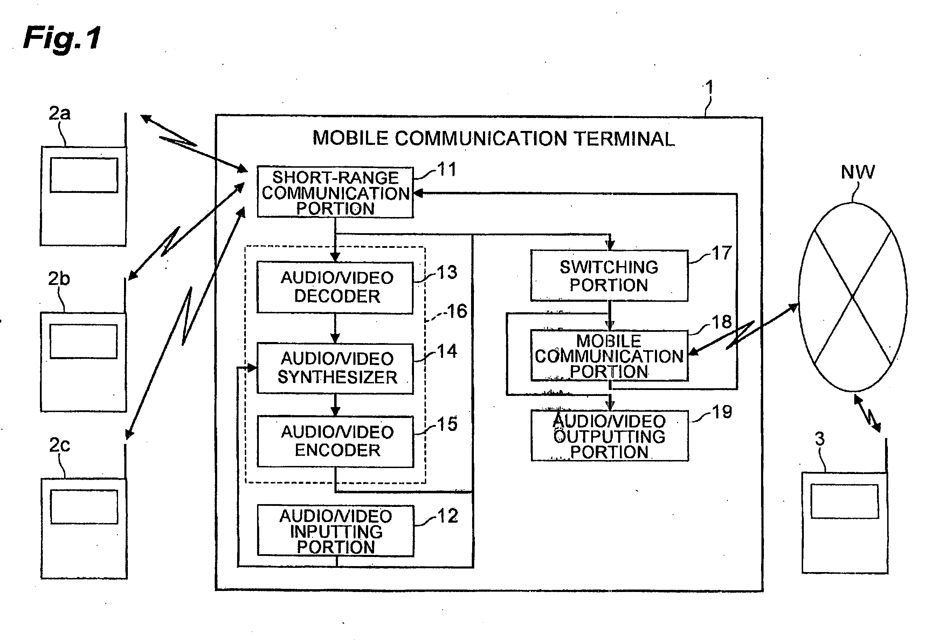

Fig. 1 is a general block diagram of a mobile communication terminal 1 that is the first embodiment of the present invention. The mobile communication terminal 1 shown in this figure is a communication terminal that enables the transmitting and receiving of data via a mobile communication network NW in which IMT 2000 (International Mobile Telecommunications 2000), PDC (Personal Digital Cellular) or another such mobile communication scheme is employed, and, in addition, that enables the transmitting and receiving of data using bluetooth communications, infrared communications (IrDA) or other such short-range communications. This shows a situation in which the mobile communication terminal 1 is able to be connected to a mobile communication terminal (transmission destination terminal) 3 via the mobile communication network NW, and is able to be connected to mobile communication terminals (transmission source terminals) 2a, 2b, 2c using short-range communications, but the number of connected terminals can vary in accordance with the communication capabilities of mobile communication terminal 1. In these mobile communication terminals 1, 2a, 2b, 2c, 3, application software that has videophone functions for enabling the terminals to video conference with one another are executed, and audio signals and video signals are mutually transmitted and received by the terminals, and these audio signals and video signals are simultaneously replayed. Hereinafter, "parent terminal" will refer to a terminal, which is connected via short-range communications to the plurality of transmission source terminals, and relays audio signals and video signals between one or more transmission destination terminals and this plurality of transmission source terminals, and "child terminal" will refer to a transmission source terminal that is connected to this parent terminal via short-range communications. In Fig. 1, the mobile communication terminal 1 corresponds to the "parent terminal" and the mobile communication terminals 2a, 2b, 2c correspond to "child terminals", respectively.

Next, the configuration of mobile communication terminal 1 will be explained. As shown in Fig. 1, mobile communication terminal 1 functionally comprises a short-range communication portion (short-range communication means) 11; an audio/video input portion (inputting means) 12; a signal synthesizer (signal synthesizing means) 16 that comprises an audio/video decoder 13, an audio/video synthesizer 14, and an audio/video encoder 15; a switching portion (signal selecting means) 17; a mobile communication portion (signal transmitting means) 18; and an audio/video output portion 19. The mobile communication terminal 1 relay-transmits a transmission signal comprising audio signals and video signals created by mobile communication terminals 1, 2a, 2b, 2c to mobile communication terminal 3, and at the same time relays a reception signal comprising an audio signal and video signal created by mobile communication terminal 3 to mobile communication terminals 2a, 2b, 2c. That is, mobile communication terminal 1 is a data relay apparatus that makes video conferencing among the mobile communication terminals 1, 2a, 2b, 2c, 3 possible.

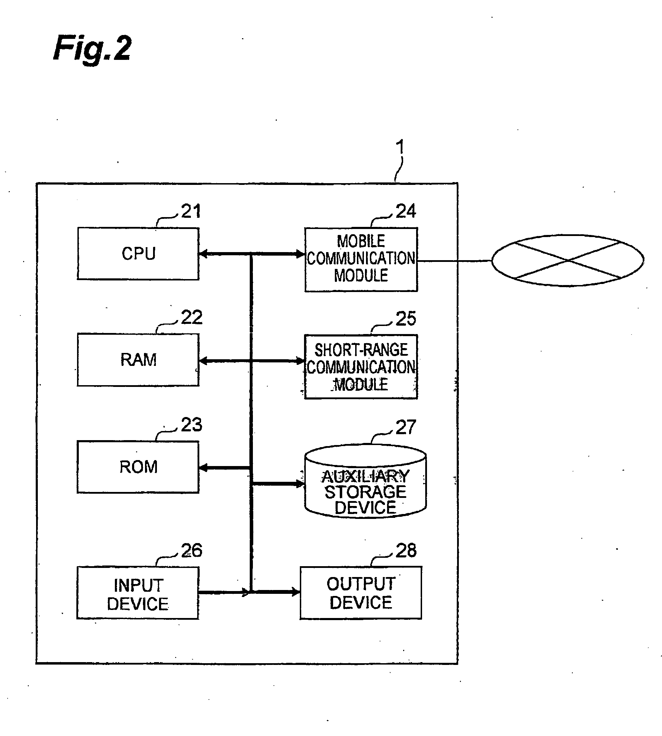

Further, Fig. 2 is a diagram of the hardware configuration of mobile communication terminal 1. As shown in Fig. 2, mobile communication terminal 1 is physically configured as a terminal apparatus comprising a CPU 21, RAM 22 and ROM 23, which are the main memory devices, a hard disk device or other such auxiliary storage device 27; an input device 26, such as input keys, a microphone and the like, which are input devices; a speaker, display or other such output device 28; a mobile communication module 24; and a short-range communication module 25, such as a Bluetooth communication module or infrared communication module. This mobile communication module 24 is for executing data communications using a mobile communication scheme, and the short-range communication module 25 is for executing data communications using a short-range communication scheme. The respective functions shown in Fig. 1 are realized by reading in the prescribed software program to the CPU 21, RAM 22 and other hardware shown in Fig. 2 and operating the communication modules 24, 25, input device 26 and output device 28 under the control of the CPU 21, and, in addition, reading out and writing the data in the RAM 22 and auxiliary storage device 27. In particular, the short-range communication portion 11 functions by using the short-range communication module 25, the mobile communication portion 18 functions by using the mobile communication module 24, the audio/video input portion 12 functions by using the input device 26, and the audio/video output portion 19 functions by using the output device 28.

The respective functional elements will be explained in detail hereinbelow by referring to Fig. 1.

The short-range communication portion 11 receives child terminal transmission signals comprising audio signals and video signals from the mobile communication terminals 2a, 2b, 2c using short-range communications. The audio signals and video signals comprised in this child terminal transmission signal are signals created using the microphones, cameras, and other such inputting means of the mobile communications terminals 2a, 2b, 2c, and the audio signals and video signals of the child terminal transmission signal, for example, are superposingly encoded using a prescribed encoding scheme, such as the ITU-T (International Telecommunication Union Telecommunication Standardization Sector) H.324 standard. At this time, the short-range communication portion 11 can multiplexedly receive the child terminal transmission signals from the plurality of mobile communication terminals 2a, 2b, 2c over the same radio link, and can receive the child terminal transmission signals from the plurality of mobile communication terminals 2a, 2b, 2c separately by connecting the radio link either serially or parallelly to the mobile communication terminals 2a, 2b, 2c. Then, the short-range communication portion 11 separates the received child terminals transmission signals for each signal from the mobile communication terminals 2a, 2b, 2c, and sends these child terminal transmission signals to the audio/video decoder 13 and switching portion 17.

Further, the short-range communication portion 11 makes it possible to replay audio and video acquired by mobile communication terminal 3 in the mobile communication terminals 2a, 2b, 2c by relay-transmitting the reception signal comprising an audio signal and video signal received via the mobile communication portion 18 from mobile communication terminal 3 to the mobile communication terminals 2a, 2b, 2c using short-range communications.

Based on audio and video directly input from outside using the input device 26, the audio/video input portion 12 creates a parent terminal transmission signal comprising an audio signal and a video signal of a signal format capable of being replayed by the audio/video output portion 19. The audio/video input portion 12 sends the created parent terminal transmission signal to the audio/video synthesizer 14. Further, the audio/video input portion 12 sends this parent terminal transmission signal to the switching portion 17 subsequent to encoding using a prescribed encoding scheme.

The audio/video decoder 13 outputs a child terminal transmission signal comprising an audio signal and video signal of a signal format capable of being replayed by the audio/video output portion 19 by decoding the child terminal transmission signal sent from the short-range communication portion 11. The audio/video decoder 13 sends the output child terminal transmission signal to the audio/video synthesizer 14.

The audio/video synthesizer 14 creates a synthesized signal by synthesizing a plurality of video and audio acquired by the mobile communication terminals 1, 2a, 2b, 2c based on the child terminal transmission signal sent from the audio/video decoder 13 and the parent terminal transmission signal sent from the audio/video input portion 12. The synthesizing of the video, for example, is carried out by creating superposition data such that a plurality of videos can be parallelly displayed inside the same image frame. Further, for the synthesizing of the audio, superposition data is created so that a plurality of audio can be replayed simultaneously. The audio/video synthesizer 14 outputs the created synthesized signal to the audio/video encoder 15.

The audio/video encoder 15 uses a prescribed encoding scheme to encode the synthesized signal output from the audio/video synthesizer 14, and sends the post-encoded synthesized signal to the switching portion 17.

Furthermore, the signal synthesizer (signal synthesizing means) 16 comprising the audio/video decoder 13, audio/video synthesizer 14, and audio/video encoder 15 is preset so as to only start up when a synthesized signal is selected by the switching portion 17 as the transmission target.

The switching portion 17 selects a transmission signal from among the child terminal transmission signal of each of the mobile communication terminals 2a, 2b, 2c sent from the short-range communication portion 11, the parent terminal transmission signal from the audio/video input portion 12, and the synthesized signal from the audio/video encoder 15, and sends the selected transmission signal to the mobile communication portion 18 and the audio/video output portion 19. The selection by the switching portion 17 is executed at this time based on a selection input received from the mobile communication terminal 1 user beforehand, a switch-signal request signal (signal selection request) received from the mobile communication terminal 3 via the mobile communication network NW, or a switch-proposal signal (signal selection request) received from the mobile communication terminals 2a, 2b, 2c via short-range communications.

The mobile communication portion 18 transmits the transmission signal sent from the switching portion 17 to mobile communication terminal 3 via the mobile communication network NW. Consequently, either the audio/video or the superposed audio/video thereof of the mobile communication terminals 1, 2a, 2b, 2c can be selectively transmitted to mobile communication terminal 3.

The audio/video output portion 19 decodes, replays and outputs to the output device 28 the transmission signal sent from the switching portion 17 so that the user of mobile communication terminal 1 can monitor the signal to be sent to the transmission destination.

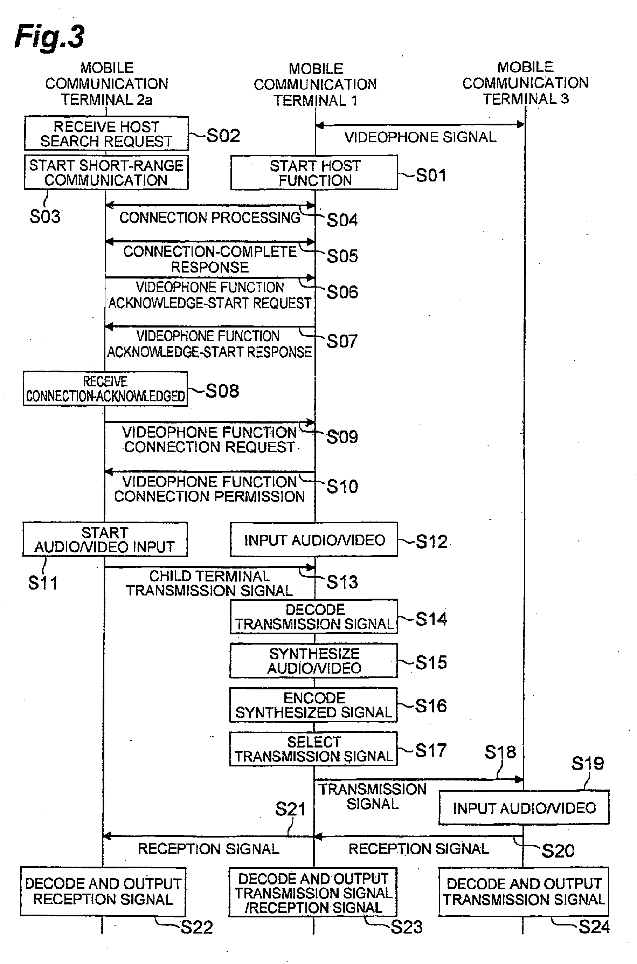

Next, the operation of a video conference communication system comprising the mobile communication terminals 1, 2a, 2b, 2c, 3 will be explained in detail by referring to Figs. 3 through 6.

Mobile communication terminal 1 has the role of the parent terminal of the mobile communication terminals 2a, 2b, 2c when carrying out videophone communications with mobile communication tenninal 3, and the mode in which the mobile communication terminals 2a, 2b, 2c participate in videophone communications is classified into a situation in which mobile communication terminal 1 functions as a host, and a situation in which mobile communication terminal 1 functions as a client. First, the procedure for commencing communications when mobile communication terminal 1 functions as the host will be explained by referring to Fig. 3. As the premise for this situation, it is supposed that a videophone communication session between mobile communication terminal 1 and mobile communication terminal 3 has already been established.

Firstly, the host function of the videophone application is started up either automatically or by the user of mobile communication terminal 1, and transits to a state of waiting for a connection from the mobile communication terminals 2a, 2b, 2c (Step S01). When a host search request is received from the user of mobile communication terminal 2a in response to this (Step S02), the short-range communication function of mobile communication terminal 2a is started up (Step S03). Thereafter, a connection request is carried out from mobile communication terminal 2a to mobile communication terminal 1, and short-range communication connection processing commences between mobile communication terminal 2a and mobile communication terminal 1 (Step S04). Then, when the short-range communication connection is established, the respective videophone applications of mobile communication terminals 1 and 2a receive a connection-complete response (Step S05).

Next, an acknowledge-start request is transmitted from the videophone application of mobile communication terminal 2a to the videophone application of mobile communication terminal 1 (Step S06), and in response to this, an acknowledge-start response is returned to the videophone application of mobile communication terminal 2a from the videophone application of mobile communication terminal 1 (Step S07). Then, the user of mobile communication terminal 2a is asked whether or not to connect to mobile communication terminal 1 by using the display, and in response to this, the user inputs a connection-acknowledged indicating that connection will be permitted (Step S08). In so doing, subsequent to a connection request being transmitted from the videophone application of mobile communication terminal 2a to the videophone application of mobile communication terminal 1 (Step S09), a permit-connection signal that shows in effect that a connection will be permitted is returned from mobile communication terminal 1 and a connection between the two parties is established (Step S10). In the processing of Step S08 here, password information and other such authentication processing can be added in accordance with a prior setting in mobile communication terminal 1.

Thereafter, as the inputting of audio and video begins and a child terminal transmission signal is created in mobile communication terminal 2a (Step S11), a parent terminal transmission signal is created by the audio/video inputting portion 12 of mobile communication terminal 1 based on input audio and input video as needed (Step S12). The created child terminal transmission signal is transmitted to mobile communication terminal 1 (Step S13).

The transmitted child terminal transmission signal, subsequent to being received by mobile communication terminal 1, is decoded by the audio/video decoder 13 in accordance with a prescribed encoding scheme (Step S14). Next, when a child terminal transmission signal is received from a plurality of terminals and the synthesized signal is selected as the transmission target by the switching portion 17, a synthesized signal is created by the audio/video synthesizer 14 (Step S15). Then, the created synthesized signal is encoded by the audio/video encoder 15 (Step S16). Thereafter, one transmission signal is selected by the switching portion 17 from among the encoded synthesized signal, the respective child terminal transmission signals, and the parent terminal transmission signal (Step S17), and this transmission signal is transmitted to mobile communication terminal 3 by the mobile communication portion 18 (Step S18).

In the meantime, a reception signal is created based on the video and audio input to mobile communication terminal 3 (Step S19), and this reception signal, subsequent to being encoded using the prescribed encoding scheme, is transmitted to mobile communication terminal 1 via the mobile communication network NW (Step S20). Then, after being received one time by the mobile communication portion 18, the reception signal is relay-transmitted to mobile communication terminals 2a, 2b, 2c by the short-range communication portion 11 (Step S21).

In mobile communication terminal 1, the reception signal received from mobile communication terminal 3 is decoded and replayed by the audio/video output portion 19 (Step S23), thereby enabling the video and audio in mobile communication terminal 3 to be output to the output device 28. The transmission signal selected by the switching portion 17 is also decoded and replayed by the audio/video output portion 19 at the same time as this (Step S23). Further, in mobile communication terminals 2a and 3, the reception signal from mobile communication terminal 3, and the transmission signal selectively transmitted from mobile communication terminal 1 are respectively decoded and replayed (Step S22, S24).

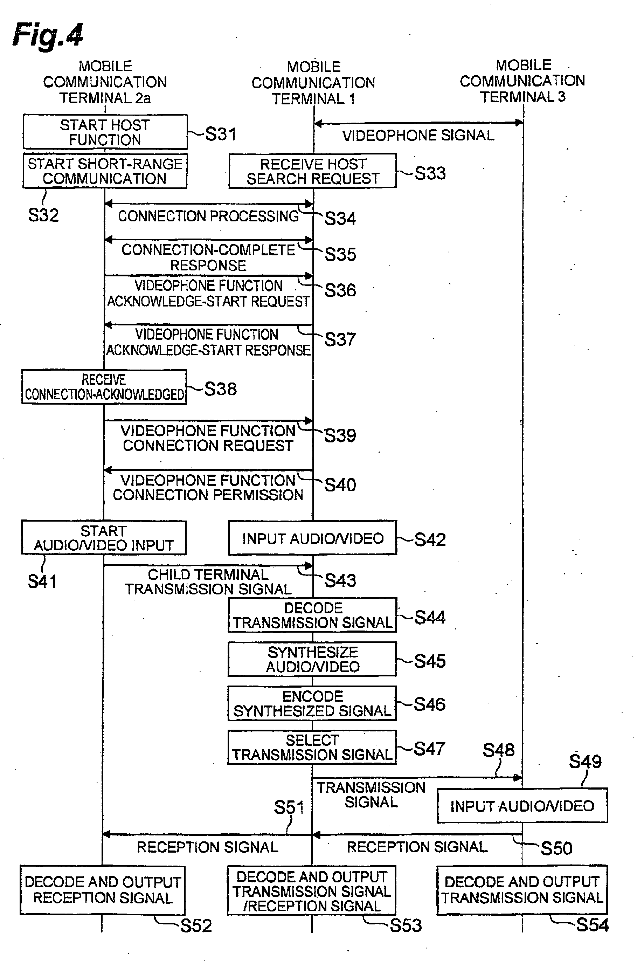

Moving to Fig. 4, the procedure for commencing communications when mobile communication terminal 1 functions as a client will be explained.

Firstly, the host function of the videophone application is started up by the user of mobile communication terminal 2a, and transits to a state of waiting for a connection from mobile communication terminal 1 (Step S31). The short-range communication function of mobile communication terminal 2a is started up in response to this (Step S32). Thereafter, when a host search request is received from the user of mobile communication terminal 1 (Step S33), a connection request is issued from mobile communication terminal 1 to mobile communication terminal 2a, and short-range communication connection processing commences between mobile communication terminal 1 and mobile communication terminal 2a (Step S34). Then, when the short-range communication connection is established, the respective videophone applications of mobile communication terminals 1 and 2a receive a connection-complete response (Step S35).

Next, an acknowledge-start request is transmitted from the videophone application of mobile communication terminal 2a to the videophone application of mobile communication terminal 1 (step S36), and in response to this, an acknowledge-start response is returned to the videophone application of mobile communication terminal 2a from the videophone application of mobile communication terminal 1 (Step S37). Then, the user of mobile communication terminal 2a is asked whether or not to connect to mobile communication terminal 1 by using the display, and in response to this, the user inputs connection-acknowledged indicating that connection will be permitted (Step S38). In so doing, subsequent to a connection request being transmitted from the videophone application of mobile communication terminal 2a to the videophone application of mobile communication terminal 1 (Step S39), a permit-connection signal that shows in effect that a connection will be permitted is returned from mobile communication terminal 1 and a connection between the two parties is established (Step S40). Thereafter, videophone communications are carried out between the mobile communication terminals 1, 2a, 3 using the same processing as in the above-described Steps S11 through S24 (Steps S41 through S54).

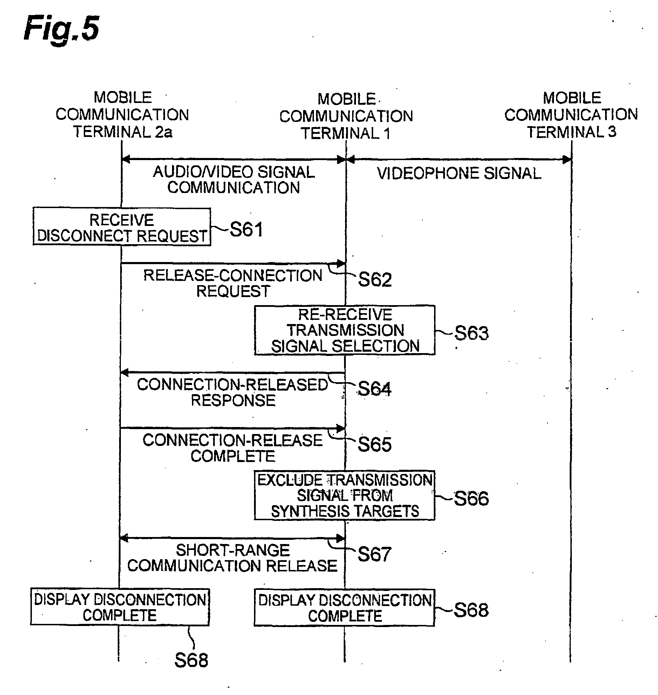

Moving to Fig. 5, the procedure for disconnecting the videoconference communications of mobile communication terminal 2a when mobile communication terminal 1 functions as the host will be explained.

First, a disconnect request is received from the user of mobile communication terminal 2a when videophone communications are being carried out among the mobile communication terminals 1, 2a, 3 (Step S61). When this happens, a release-connection request is sent from the videophone application of mobile communication terminal 2a to the videophone application of mobile communication terminal 1 using short-range communication (Step S62). When the child terminal transmission signal of mobile communication terminal 2a is selected as the transmission target by the switching portion 17 in response to this, a re-select of transmission target is received from the user of mobile communication terminal 1, and the transmission signal output by the switching portion 17 is switched on the basis of this (Step S63).

Thereafter, the videophone communication connection between mobile communication terminal 2a and mobile communication terminal 1 is released, and a connection-released response is returned from mobile communication terminal 1 to mobile communication terminal 2a (Step S64). Accordingly, a connection-release complete is transmitted from mobile communication terminal 2a to mobile communication terminal 1 (Step S65). Next, the child terminal transmission signal from mobile communication terminal 2a is deselected from the targets for synthesis processing by the audio/video synthesizer 14 (Step S66). Then, the short-range communication session between mobile communication terminal 2a and mobile communication terminal 1 is released (Step S67), and videophone communication disconnection complete is displayed on the mobile communication terminals 1, 2a (Step S68).

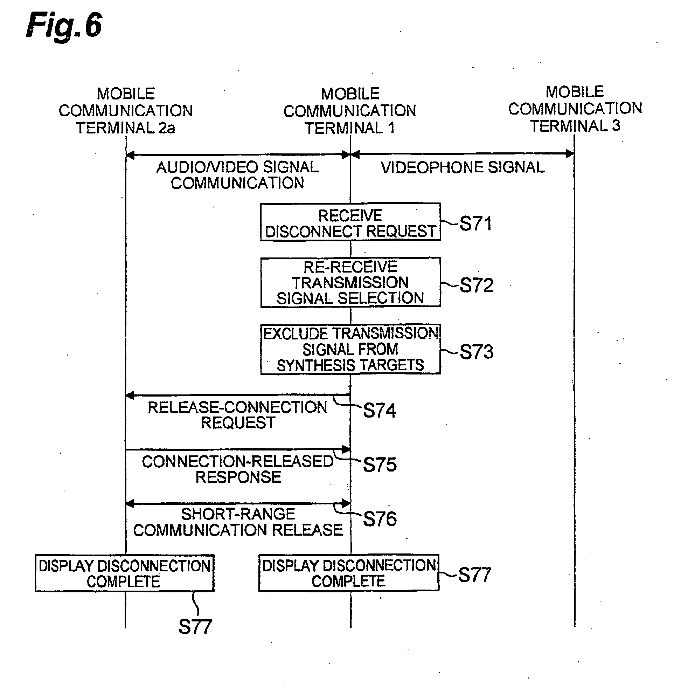

Next, the procedure for disconnecting videophone communication of mobile communication terminal 2a when mobile communication terminal 1 functions as the client will be explained by referring to Fig. 6.

First, a request to disconnect videophone communication with mobile communication terminal 2a is received from the user of mobile communication terminal 1 when videophone communications are being carried out among the mobile communication terminals 1, 2a, 3 (Step S71). So when the child terminal transmission signal of mobile communication terminal 2a is selected as the transmission target by the switching portion 17, a re-select of transmission target is received from the user of mobile communication terminal 1, and the transmission signal output by the switching portion 17 is switched on the basis of this (Step S72). Further, the child terminal transmission signal from mobile communication terminal 2a is deselected from the targets for synthesis processing by the audio/video synthesizer 14 (Step S73).

Thereafter, a release-connection request is sent from the videophone application of mobile communication terminal 1 to the videophone application of mobile communication terminal 2a using short-range communications (Step S74). Accordingly, the videophone communication connection between mobile communication terminal 2a and mobile communication terminal 1 is released, and a connection-released response is returned from mobile communication terminal 2a to mobile communication terminal 1 (Step S75). Then, the short-range communication session between mobile communication terminal 2a and mobile communication terminal 1 is released (Step S76), and videophone communication disconnection complete is displayed on the mobile communication terminals 1, 2a (Step S77).

According to the mobile communication terminal 1 explained hereinabove, one signal is selected from among a parent terminal transmission signal, which is based on audio and video that was directly input from outside, child terminal transmission signals, which have been received as audio or video from a plurality of mobile communication terminals 2a, 2b, 2c via short-range communications, and a synthesized signal, which synthesizes the parent terminal transmission signal and the child terminal transmission signals, and is transmitted to a mobile communication terminal 3 via the mobile communication network NW. Consequently, when video and audio from a plurality of mobile communication terminals are selectively transmitted to a transmission destination, since the required signal is selected beforehand and sent to the mobile communication network, wasteful traffic is reduced, making it possible to lower communication costs using a simple configuration. That is, automatically switching the uplink signal from data transmission sources results in the data source that occupies the communication channel differing each time, thereby dramatically reducing data communications quantity and communication costs compared to simply multiplexedly transmitting video signals and audio signals from a plurality of transmission sources.

Further, since the switching portion 17 selects a transmission signal based on signal selection requests transmitted from the mobile communication terminals 2a, 2b, 2c, 3, the timely provision of either video or audio in a video conference is realized.

Further, since the reception of child terminal transmission signals commences when short-range communication sessions are established with mobile communication terminals 2a, 2b, 2c, it is possible to reliably receive either a video signal or audio signal from the transmission source terminal, enabling the convening and smooth participation in a video conference of transmission source terminals.

### [Second Embodiment]

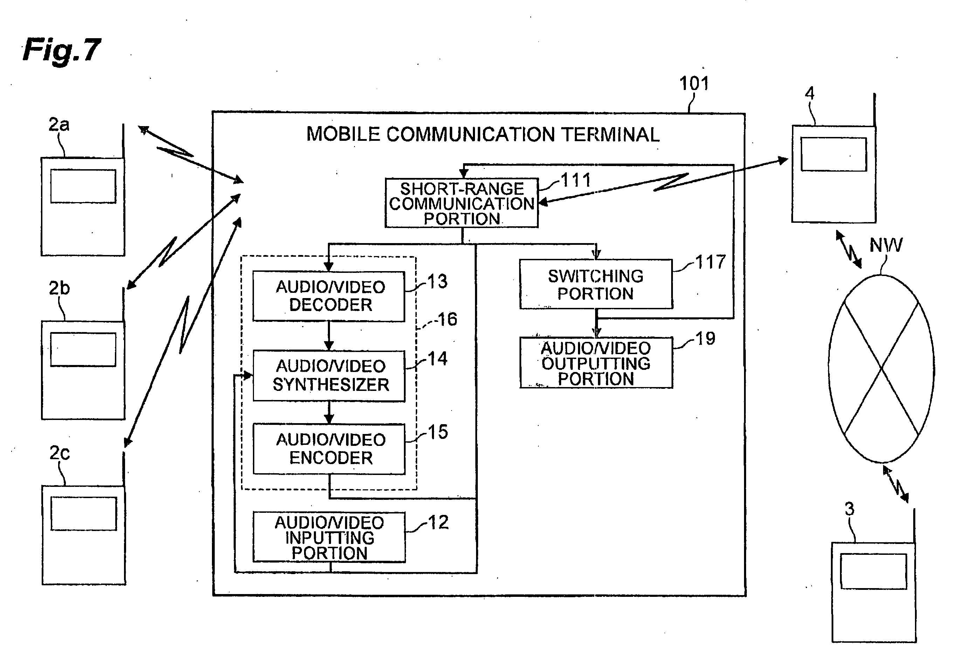

Next, a second embodiment of the present invention will be explained. Fig. 7 is a general block diagram of a mobile communication terminal 101, which is the second embodiment of the present invention. The mobile communication terminal 101 shown in this figure differs from the first embodiment in that the child terminal transmission signals received from the mobile communication terminals 2a, 2b, 2c via short-range communications are relay-transmitted to a mobile communication terminal 4 via short-range communications, and, in addition, a reception signal received from mobile communication terminal 3 by way of mobile communication terminal 4 using short-range communication is relay-transmitted to the mobile communication terminals 2a, 2b, 2c. That is, mobile communication terminal 101 has a role as a hub device for relaying a video signal and an audio signal using short-range communications, and mobile communication terminal 101 corresponds to the "parent terminal" and mobile communication terminals 2a, 2b, 2c correspond to the "child terminals". It is supposed here that mobile communication terminal 4 is able to connect to mobile communication terminal 3 via the mobile communication network NW, and is able to connect to mobile communication terminal 101 via short-range communications.

As shown in Fig. 7, mobile communication terminal 101 functionally comprises a short-range communication portion (short-range communication means) 111; audio/video input portion (inputting means) 12; a signal synthesizer (signal synthesizing means) 16 that comprises an audio/video decoder 13, an audio/video synthesizer 14, and an audio/video encoder 15; a switching portion (signal selecting means) 117; and an audio/video output portion 19. Only the parts having functions that differ from the first embodiment will be explained hereinbelow.

The short-range communication portion 111 sends child terminal transmission signals received via short-range communications from mobile communication terminals 2a, 2b, 2c to the switching portion 117 and the audio/video decoder 13, and, at the same time, receives a reception signal from mobile communication terminal 3 via short-range communications by way of mobile communication terminal 4, and relay-transmits this reception signal to the mobile communication terminals 2a, 2b, 2c. Further, the short-range communication portion 111 transmits a transmission signal selectively output by the switching portion 117 to mobile communication terminal 4 via short-range communications. This transmission signal is relayed to mobile communication terminal 3 via the mobile communication network NW by mobile communication terminal 4.

The switching portion 117 selects a transmission signal from among the child terminal transmission signals output from the short-range communication portion 111, a parent terminal transmission signal and a synthesized signal, and outputs this selected transmission signal to the short-range communication portion 111.

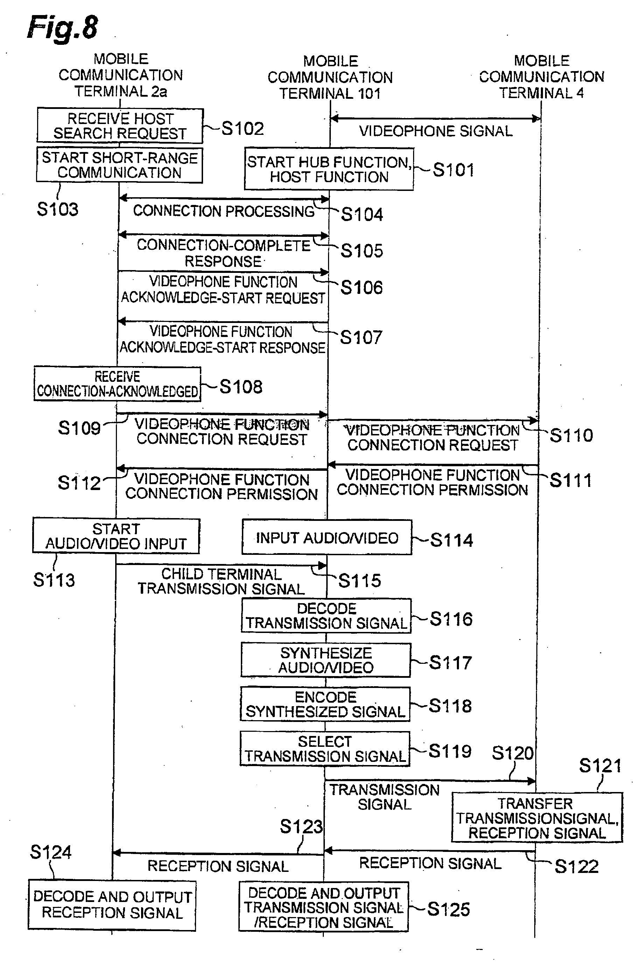

The operation of a video conference communication system comprising mobile communication terminals 101, 2a, 2b, 2c, 3, 4 will be explained in detail hereinbelow by referring to Figs. 8 through 13.

Fig. 8 is a sequence diagram showing the communication start-up procedure when mobile communication terminal 101 functions as the host. Steps S102 through S109, S112 through S120, and S122 through S125 shown in this figure are the same processing as Steps S02 through S18 and S20 through S23 of Fig. 3.

Firstly, in mobile communication terminal 101, a host function of videophone application is started up together with a hub function (Step S101). Thereafter, when acknowledgement of the short-range communication connection and acknowledgement of the start of the videophone application function by mobile communication terminal 2a have been completed, and a videophone communication connection request is transmitted from mobile communication terminal 2a to mobile communication terminal 101, this connection request is transferred to mobile communication terminal 4, and authentication processing for a connection between mobile communication terminal 2a and mobile communication terminal 4 is executed (Step S110). Then, when authentication processing ends normally, a videophone communication permit-connection is transmitted from mobile communication terminal 4 to mobile communication terminal 101 (Step S111), and relayed to mobile communication terminal 2a (Step S112).

Thereafter, a transmission signal is transmitted from mobile communication terminal 101 to mobile communication terminal 4 using short-range communication (Step S120), and this transmission signal is relayed to mobile communication terminal 3 via the mobile communication network NW, and, at the same time, a reception signal from mobile communication terminal 3 is relayed to mobile communication terminal 101 using short-range communication (Step S121). Furthermore, it is also possible for mobile communication terminal 4 to switch the signal to a video signal and audio signal acquired in its own terminal and transmit it to mobile communication terminal 3.

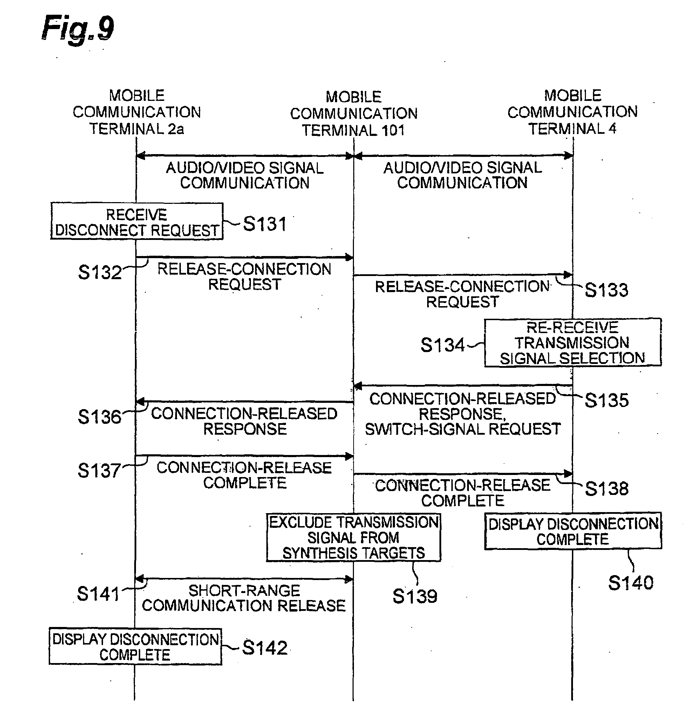

Moving to Fig. 9, the procedure for disconnecting videophone communications of mobile communication terminal 2a when mobile communication terminal 101 functions as the host will be explained.

First, a disconnect request is received from mobile communication terminal 2a user when videophone communications are being carried out among mobile communication terminals 101, 2a, 3, 4 (Step S131). In so doing, a release-connection request is sent from the videophone application of mobile communication terminal 2a to the videophone application of mobile communication terminal 101 using short-range communication, and the release-connection request is transferred to mobile communication terminal 4 by mobile communication terminal 101 (Steps S132, S133). In response to this, when the child terminal transmission signal of mobile communication terminal 2a is selected as the transmission target by the switching portion 17, a re-select of transmission target is received from the user of mobile communication terminal 4 (Step S134). A switch-signal request based on this re-select is transmitted to mobile communication terminal 101 from mobile communication terminal 4, and, at the same time, a release-connection response is transmitted from mobile communication terminal 4 to mobile communication terminal 2a by way of mobile communication terminal 101, and the videophone communication connection between mobile communication terminal 2a and mobile communication terminal 101 is released (Steps S135, S136).

Accordingly, a connection-release complete is transmitted from mobile communication terminal 2a to mobile communication terminal 4 by way of mobile communication terminal 101 (Steps S137, S138). Next, the child terminal transmission signal of mobile communication terminal 2a is deselected from the targets for synthesis processing by the audio/video synthesizer 14 (Step S139). Thereafter, videophone communication disconnection complete is displayed on mobile communication terminal 4 (Step S140). Then, the short-range communication session between mobile communication terminal 2a and mobile communication terminal 101 is released (Step S141), and videophone communication disconnection complete is displayed on mobile communication terminal 2a (Step S142).

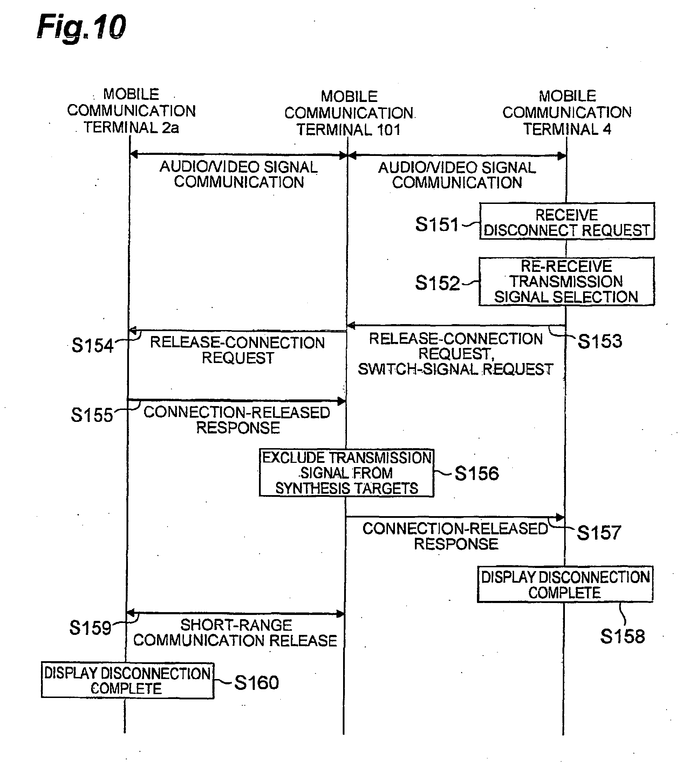

Next, the procedure for disconnecting videophone communications of mobile communication terminal 2a from mobile communication terminal 4 when mobile communication terminal 101 functions as the host will be explained by referring to Fig. 10.

First, a disconnect request is received from mobile communication terminal 4 user (Step S151). In response to this, when the child terminal transmission signal of mobile communication terminal 2a is selected as the transmission target by the switching portion 17 of mobile communication terminal 101, a re-select of transmission target is received from the user of mobile communication terminal 4 (Step S152). In so doing, a switch-signal request based on this re-select is transmitted from mobile communication terminal 4 to mobile communication terminal 101, and, at the same time, a release-connection request is transmitted from mobile communication terminal 4 to mobile communication terminal 2a by way of mobile communication terminal 101, and the videophone communication connection between mobile communication terminal 2a and mobile communication terminal 101 is released (Steps S153, S154). When release-connection is complete, a connection-released response is sent from mobile communication terminal 2a to mobile communication terminal 101 using short-range communication (Step S155).

Accordingly, the child terminal transmission signal from mobile communication terminal 2a is deselected from the targets for synthesis processing by the audio/video synthesizer 14 (Step S156). Thereafter, the relaying of the connection-released response from mobile communication terminal 2a to mobile communication terminal 4 (Step S157) results in disconnection complete being displayed on mobile communication terminal 4 (Step S158). Then, the short-range communication session between mobile communication terminal 2a and mobile communication terminal 101 is released (Step S159), and videophone communication disconnection complete is displayed on mobile communication terminal 2a (Step S160).

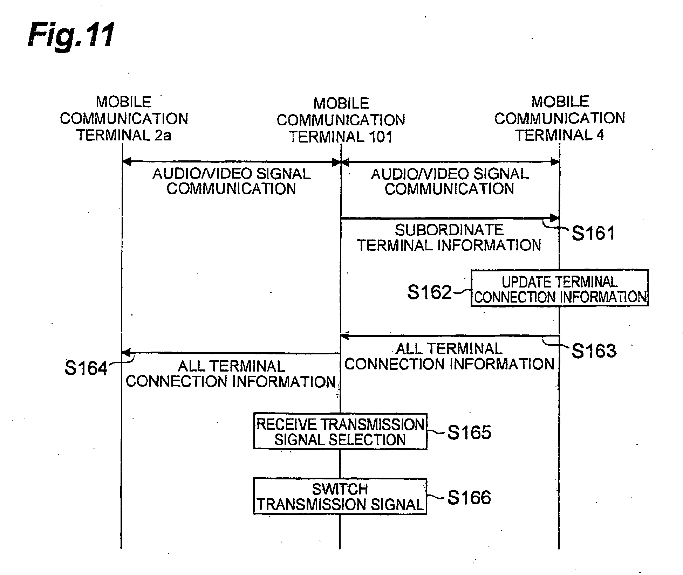

Furthermore, Fig. 11 shows the procedure for notifying the respective mobile communication terminals 101, 2a, 4 of information related to a connected child terminal. First, information related to a subordinate terminal connected to mobile communication terminal 101 is constantly transmitted from mobile communication terminal 101 to mobile communication terminal 4 during videophone communications (Step S161). In response to this, mobile communication terminal 4 updates connected terminal-related information that is held inside its own terminal (Step S162).

Then, mobile communication terminal 4 transmits information related to all the connected terminals subordinate to mobile communication terminal 4 to mobile communication terminal 101 (Step S163), and mobile communication terminal 101 relays this information to mobile communication terminal 2a (Step S164). Consequently, the respective mobile communication terminals 101, 2a, 4 are able to discern the terminal group taking part in the video conference, and mobile communication terminal 101 receives the transmission signal selection based on this (Step S165), making it possible to switch the transmission signal to be transmitted to mobile communication terminal 4 (Step S166).

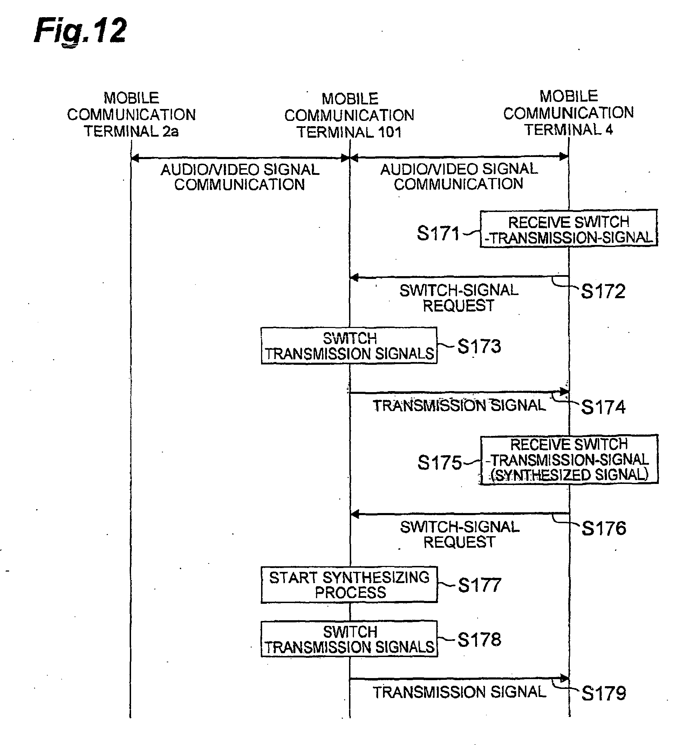

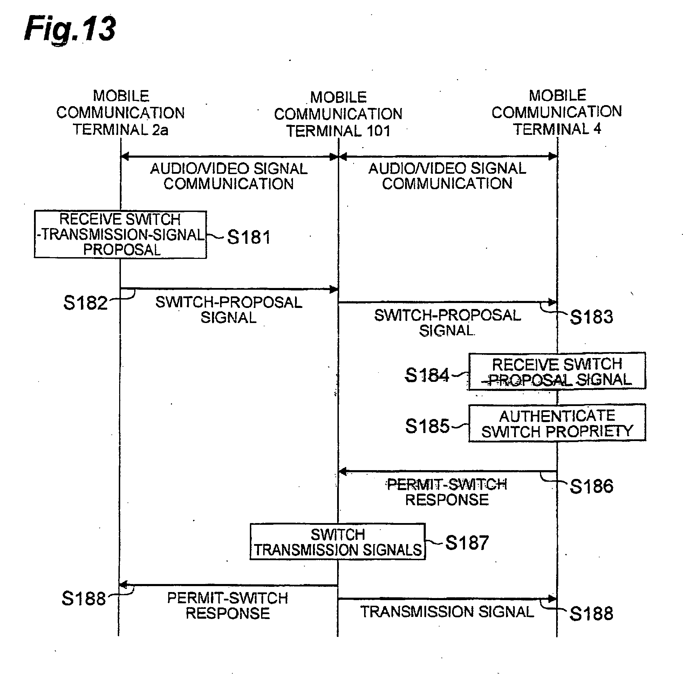

Figs. 12 and 13 respectively show the procedures for receiving a transmission signal selection from mobile communication terminal 4 and mobile communication terminal 2a.

Referring to Fig. 12, when a switch request for switching the transmission signal to the parent terminal transmission signal of mobile communication terminal 101 is received from the user of mobile communication terminal 4 (Step S171), this switch request is transmitted to mobile communication terminal 101 1 (Step S172). In response to this, the transmission signal is switched by the switching portion 117 of mobile communication terminal 101 (Step S173). Then, the switched transmission signal is transmitted from mobile communication terminal 101 to mobile communication terminal 4 (Step S174).

Conversely, when a switch request for switching the transmission signal to the synthesized signal is received from the user of mobile communication terminal 4 (Step S175), this switch request is transmitted to mobile communication terminal 101 (Step S176). In response to this, the signal synthesizer 16 function of mobile communication terminal 101, which up until this time had been suspended, is started up (Step S177). Next, the transmission signal is switched to the synthesized signal by the switching portion 117 (Step S178). Then, the synthesized signal is transmitted from mobile communication terminal 101 to mobile communication terminal 4 (Step S179).

Referring to Fig. 13, when a switch-proposal signal for switching the transmission signal to the parent terminal transmission signal of mobile communication terminal 101 is received from the user of mobile communication terminal 2a (Step S181), this switch-proposal signal is transmitted to mobile communication terminal 4 by way of mobile communication terminal 101 (Steps S182, S183). In response to this, when this switch-proposal signal is received by mobile communication terminal 4 (Step S184), the propriety of the switch-proposal signal is authenticated based on authentication information held beforehand inside the terminal (Step S185). When the switch is permitted in accordance with this authentication, a permit-switch response is transmitted from mobile communication terminal, 4 to mobile communication terminal 101 (Step S186). Accordingly, the transmission signal is switched by the switching portion 117 of mobile communication terminal 101 (Step S187). Then, the switched transmission signal is transmitted from mobile communication terminal 101 to mobile communication terminal 4 (Step S188), and, at the same time, the permit-switch response is transferred to mobile communication terminal 2a (Step S188).

In accordance with the mobile communication terminal 101 explained hereinabove, too, when video and audio are selectively transmitted to a transmission destination from a plurality of mobile communication terminals, the required signal is selected beforehand and sent to the parent terminal, which is directly connected to the mobile communication network, and since this parent terminal relays these selected video and audio to the transmission destination via the mobile communication network, wasteful traffic is reduced, making it possible to lower communication costs with a simple configuration. In particular, the mobile communication terminal 101 functioning as a hub device makes it possible to further reduce the processing load, and, in addition, to easily increase the number of connected terminals.

## Claims

1. A mobile communication terminal (1, 101) for use in signal relay for relaying transmission signals, which are audio signals or video signals created by a plurality of transmission source terminals (2a, 2b, 2c) , to a transmission destination terminal (3) that is connected via a mobile communication network (NW), comprising:
inputting means (12) for creating a first transmission signal, which is an audio signal or a video signal, based on audio or video directly input from outside;
short-range communication means (11, 111) for receiving second transmission signals, which are audio signals or video signals, from the plurality of transmission source terminals (2a, 2b, 2c) via short-range communications;
signal synthesizing means (14) for synthesizing the first transmission signal with the second transmission signals transmitted from the plurality of transmission source terminals (2a, 2b, 2c), and outputting a synthesized signal;
signal selecting means (17, 117) for selecting a signal from among the first transmission signal, the second transmission signals, and the synthesized signal; and
signal transmitting means (18, 111) for transmitting the signal selected by the signal selecting means (17, 117) to the transmission destination terminal (3) via the mobile communication network (NW);
wherein the signal selecting means (17, 117) selects a signal based on a select-signal request transmitted from the transmission source terminal (2a, 2b, 2c) or the transmission destination terminal (3).

2. The mobile communication terminal (1, 101) according to Claim 1, wherein the short-range communication means (11, 111) commences receiving the second transmission signal from the transmission source terminal (2a, 2b, 2c) subsequent to receiving a connection request from this transmission source terminal (2a, 2b, 2c), and
the signal synthesizing means (14) synthesizes the first transmission signal with the second transmission signal that has been transmitted from the transmission source terminal (2a, 2b, 2c), which is the transmission source of the connection request.

3. The mobile communication terminal (1, 101) according to Claim 1, wherein the short-range communication means (11, 111) commences receiving the second transmission signal from the transmission source terminal (2a, 2b, 2c) subsequent to a connection to this transmission source terminal (2a, 2b, 2c) having been established, and
the signal synthesizing means (14) synthesizes the first transmission signal with the second transmission signal that has been transmitted from the transmission source terminal (2a, 2b, 2c), which is the transmission source of the connection request.

4. A signal relay method for relaying transmission signals, which are audio signals or video signals created by a plurality of transmission source terminals, to a transmission destination terminal connected via a mobile communication network, comprising the steps of:
creating (S12, S42, S114) a first transmission signal, which is an audio signal or a video signal, based on audio or video directly input from outside;
receiving (S13, S43, S115) second transmission signals, which are audio signals or video signals, from the plurality of transmission source terminals (2a, 2b, 2c) via short-range communications;
synthesizing (S15, S45, S117) the first transmission signal with the second transmission signals transmitted from the plurality of transmission source terminals, and outputting a synthesized signal;
selecting (S17, S47, S119) a signal from among the first transmission signal, the second transmission signals, and the synthesized signal; and
transmitting (S18, S48, S120) the signal selected by the signal selecting means to the transmission destination terminal via the mobile communication network;
wherein the signal select on is based on a select-signal request transmitted from the transmission source terminal or the transmission destination terminal.

## Patentansprüche

1. Mobil-Kommunikations-Endgerät (1, 101) zur Verwendung in Signal-Weiterleitung zum Weiterleiten von Übertragungs-Signalen, welche Audio-Signale oder Video-Signale, erzeugt von einer Mehrzahl von Übertragungs-Quelle-Endgeräten (2a, 2b, 2c) sind, zu einem Übertragungs-Ziel-Endgerät (3), das über ein Mobil-Kommunikations-Netzwerk (NW) verbunden ist, aufweisend:
Eingabe-Mittel (12) zum Erzeugen eines ersten Übertragungs-Signals, welches ein Audio-Signal oder ein Video-Signal ist, basierend auf direkt von außen eingegebenem Audio oder Video;
Kurz-Reichweite-Kommunikations-Mittel (11, 111) zum Empfangen von zweiten Übertragungs-Signalen, welche Audio-Signale oder Video-Signale sind, von der Mehrzahl von Übertragungs-Quelle-Endgeräten (2a, 2b, 2c) über Kurz-Reichweite-Kommunikationen;
Signal-Synthetisierungs-Mittel (14) zum Synthetisieren des ersten Übertragungs-Signals mit den von der Mehrzahl von Übertragungs-Quelle-Endgeräten (2a, 2b, 2c) übertragenen zweiten Übertragungs-Signalen und Ausgeben eines synthetisierten Signals;
Signal-Auswahl-Mittel (17, 117) zum Auswählen eines Signals aus dem ersten Übertragungs-Signal, den zweiten Übertragungs-Signalen und dem synthetisierten Signal; und
Signal-Übertragungs-Mittel (18, 111) zum Übertragen des durch das Signal-Auswahl-Mittel (17, 117) ausgewählten Signals zu dem Übertragungs-Ziel-Endgerät (3) über das Mobil-Kommunikations-Netzwerk (NW);
wobei das Signal-Auswahl-Mittel (17, 117) ein Signal auswählt basierend auf einer von dem Übertragungs-Quelle-Endgerät (2a, 2b, 2c) oder dem Übertragungs-Ziel-Endgerät (3) übertragenen Auswahl-Signal-Anforderung.

2. Mobil-Kommunikations-Endgerät (1, 101) gemäß Anspruch 1, wobei das Kurz-Reichweite-Kommunikations-Mittel (11, 111) Empfangen des zweiten Übertragungs-Signals von dem Übertragungs-Quelle-Endgerät (2a, 2b, 2c) beginnt im Anschluss an Empfangen einer Verbindungs-Anforderung für dieses Übertragungs-Quelle-Endgerät (2a, 2b, 2c), und
das Signal-Synthetisierungs-Mittel (14) das erste Übertragungs-Signal mit dem zweiten Übertragungs-Signal, das von dem Übertragungs-Quelle-Endgerät (2a, 2b, 2c), welches die Übertragungs-Quelle der Verbindungs-Anforderung ist, übertragen worden ist, synthetisiert.

3. Mobil-Kommunikations-Endgerät (1, 101) gemäß Anspruch 1, wobei das Kurz-Reichweite-Kommunikations-Mittel (11, 111) Empfangen des zweiten Übertragungs-Signals von dem Übertragungs-Quelle-Endgerät (2a, 2b, 2c) beginnt im Anschluss daran, dass eine Verbindung zu diesem Übertragungs-Quelle-Endgerät (2a, 2b, 2c) aufgebaut worden ist, und
das Signal-Synthetisierungs-Mittel (14) das erste Übertragungs-Signal mit dem zweiten Übertragungs-Signal, das von dem Übertragungs-Quelle-Endgerät (2a, 2b, 2c), welches die Übertragungs-Quelle der Verbindungs-Anforderung ist, übertragen worden ist, synthetisiert.

4. Signal-Weiterleitungs-Verfahren zum Weiterleiten von Übertragungs-Signalen, welche Audio-Signale oder Video-Signale, erzeugt von einer Mehrzahl von Übertragungs-Quelle-Endgeräten, sind, zu einem über ein Mobil-Kommunikations-Netzwerk (NW) verbundenen Übertragungs-Ziel-Endgerät, aufweisend die Schritte des:
Erzeugens (S12, S42, S114) eines ersten Übertragungs-Signals, welches ein Audio-Signal oder ein Video-Signal ist, basierend auf direkt von außen eingegebenem Audio oder Video;
Empfangens (S13, S43, S115) von zweiten Übertragungs-Signalen, welche Audio-Signale oder Video-Signale sind, von der Mehrzahl von Übertragungs-Quelle-Endgeräten (2a, 2b, 2c) über Kurz-Reichweite-Kommunikationen;
Synthetisierens (S15, S45, S117) des ersten Übertragungs-Signals mit den von der Mehrzahl von Übertragungs-Quelle-Endgeräten übertragenen zweiten Übertragungs-Signalen, und Ausgebens eines synthetisierten Signals;
Auswählens (S17, S47, S119) eines Signals aus dem ersten Übertragungs-Signal, den zweiten Übertragungs-Signalen und dem synthetisierten Signal; und
Übertragens (S18, S48, S120) des durch das Signal-Auswahl-Mittel ausgewählten Signals zu dem Übertragungs-Ziel-Endgerät über das Mobil-Kommunikations-Netzwerk;
wobei die Signal-Auswahl basiert auf einer von dem Übertragungs-Quelle-Endgerät oder dem Übertragungs-Ziel-Endgerät übertragenen Auswahl-Signal-Anforderung.

## Revendications

1. Terminal de communication mobile (1, 101) destiné à être utilisé dans un relais de signal servant à relayer des signaux de transmission, qui sont des signaux audio ou des signaux vidéo créés par une pluralité de terminaux de source de transmission (2a, 2b, 2c), vers un terminal de destination de transmission (3) qui est connecté par l'intermédiaire d'un réseau de communication mobile (NW), comprenant :
des moyens d'entrée (12) servant à créer un premier signal de transmission, qui est un signal audio ou un signal vidéo, sur la base d'une audio ou d'une vidéo entrée directement à partir de l'extérieur ;
des moyens de communication à courte portée (11, 111) destinés à recevoir des deuxièmes signaux de transmission, qui sont des signaux audio ou des signaux vidéo, en provenance de la pluralité de terminaux de source de transmission (2a, 2b, 2c) par l'intermédiaire de communications à courte portée ;
des moyens de synthétisation de signal (14) servant à synthétiser le premier signal de transmission avec les deuxièmes signaux de transmission transmis par la pluralité de terminaux de source de transmission (2a, 2b, 2c), et à délivrer en sortie un signal synthétisé ;
des moyens de sélection de signal (17, 117) servant à sélectionner un signal parmi le premier signal de transmission, les deuxièmes signaux de transmission, et le signal synthétisé ; et
des moyens de transmission de signaux (18, 111) servant à transmettre le signal sélectionné par les moyens de sélection de signal (17, 117) au terminal de destination de transmission (3) par l'intermédiaire du réseau de communication mobile (NW) ;
dans lequel les moyens de sélection de signal (17, 117) sélectionnent un signal en fonction d'une demande de sélection de signal transmise par le terminal de source de transmission (2a, 2b, 2c) ou le terminal de destination de transmission (3).

2. Terminal de communication mobile (1, 101) selon la revendication 1, dans lequel les moyens de communication à courte portée (11, 111) commencent la réception du deuxième signal de transmission en provenance du terminal de source de transmission (2a, 2b, 2c) suite à la réception d'une demande de connexion provenant de ce terminal de source de transmission (2a, 2b, 2c), et
les moyens de synthétisation de signal (14) synthétisent le premier signal de transmission avec le deuxième signal de transmission qui a été transmis par le terminal de source de transmission (2a, 2b, 2c), qui est la source de transmission de la demande de connexion.

3. Terminal de communication mobile (1, 101) selon la revendication 1, dans lequel les moyens de communication à courte portée (11, 111) commencent la réception du deuxième signal de transmission provenant du terminal de source de transmission (2a, 2b, 2c) suite à l'établissement d'une connexion à ce terminal de source de transmission (2a, 2b, 2c), et
les moyens de synthétisation de signal (14) synthétisent le premier signal de transmission avec le deuxième signal de transmission qui a été transmis par le terminal de source de transmission (2a, 2b, 2c), qui est la source de transmission de la demande de connexion.

4. Procédé de relais de signal destiné à relayer des signaux de transmission, qui sont des signaux audio ou des signaux vidéo créés par une pluralité de terminaux de source de transmission, vers un terminal de destination de transmission qui est connecté par l'intermédiaire d'un réseau de communication mobile, comprenant les étapes consistant à :
créer (S12, S42, S114) un premier signal de transmission, qui est un signal audio ou un signal vidéo, en fonction d'une audio ou d'une vidéo entrée directement à partir de l'extérieur ;
recevoir (S13, S43, S115) des deuxièmes signaux de transmission, qui sont des signaux audio ou des signaux vidéo, en provenance de la pluralité de terminaux de source de transmission (2a, 2b, 2c) par l'intermédiaire de communications à courte portée ;
synthétiser (S15, S45, S117) le premier signal de transmission avec les deuxièmes signaux de transmission transmis par la pluralité de terminaux de source de transmission, et délivrer en sortie un signal synthétisé ;
sélectionner (S17, S47, S119) un signal parmi le premier signal de transmission, les deuxièmes signaux de transmission, et le signal synthétisé ; et
transmettre (S18, S48, S120) le signal sélectionné par les moyens de sélection de signal au terminal de destination de transmission par l'intermédiaire du réseau de communication mobile ;
dans lequel la sélection de signal est basée sur une demande de sélection de signal transmise par le terminal de source de transmission ou du terminal le destination de transmission.
